# FASCICULE DE BREVET EUROPEEN

(11) **EP 1 954 936 B1**
(45) Date de publication et mention de la délivrance du brevet: **14.04.2010**
(21) Numéro de dépôt: 06841831.8
(22) Date de dépôt: 30.11.2006
(51) Int. Cl.: F02M 25/07, F16K 11/052, F16K 31/04

(54) **VANNE COMPORTANT DES MOYENS D'ACTIONNEMENT ENTRE DEUX CONDUITS DE SORTIE**
VENTIL MIT BEDIENUNGSVORRICHTUNG ZWISCHEN ZWEI AUSLASSKANÄLEN
VALVE WITH OPERATING MEANS BETWEEN TWO OUTLET PASSAGES

(30) Priorité: 02.12.2005 FR 0512236
(43) Date de publication de la demande: 13.08.2008
(73) Titulaire: Valeo Systèmes de Contrôle Moteur, 95800 Cergy (FR)
(72) Inventeur: ALBERT, Laurent, F-95810 Vallangoujard (FR)
(74) Mandataire: Rolland, Jean-Christophe
(86) Numéro de dépôt international: PCT/FR2006/002621
(87) Numéro de publication internationale: WO 2007/063221

(56) Documents cités:
- EP-A- 0 625 659
- EP-A- 1 273 786
- AU-B2- 506 962
- DE-C1- 19 858 626
- FR-A- 2 854 200
- GB-A- 2 125 936
- US-A- 5 165 450
- US-A- 5 740 785
- US-A1- 2001 047 834
- US-A1- 2005 241 702

## Description

La présente invention concerne une vanne utilisable par exemple dans un dispositif de recyclage des gaz d'échappement d'un moteur thermique de véhicule automobile.

### ARRIERE PLAN DE L'INVENTION

Un dispositif de recyclage de gaz d'échappement (ou dispositif EGR de l'anglais "Exhaust Gaz Recirculation") comprend généralement une voie refroidie et une voie non refroidie reliées d'une part au circuit d'admission du moteur thermique et d'autre part à un piquage ménagé dans la zone haute pression de la tubulure d'échappement du moteur thermique. Les deux voies sont reliées l'une à l'autre par une vanne, dite "vanne de by-pass", qui régule le débit des gaz d'échappement entre la voie refroidie et la voie non refroidie. Un tel dispositif de recyclage permet la réutilisation d'une partie des gaz d'échappement dans le mélange alimentant le moteur thermique.

Les normes antipollution rendent désormais nécessaire de recycler une part plus importante des gaz d'échappement. Or, l'architecture actuelle atteint ses limites en ce qui concerne la quantité de gaz d'échappement qu'il est possible de recycler.

Pour améliorer le recyclage des gaz d'échappement, il a été imaginé de relier un dispositif de recyclage à la partie basse pression de la tubulure d'échappement, c'est-à-dire en aval de la zone de détente des gaz d'échappement, pour diriger la majeure partie des gaz d'échappement vers le circuit d'admission du moteur thermique. Il est donc nécessaire de prévoir une vanne sur la partie basse pression de la tubulure d'échappement permettant de diriger les gaz d'échappement soit vers l'extérieur soit vers le dispositif de recyclage. Cependant, dans cette partie de la tubulure, les gaz d'échappement subissent des traitements de dépollution, notamment une postcombustion, qui élèvent leur température.

La vanne doit être agencée pour résister à cette température, ce qui augmente le coût de la vanne et plus particulièrement celui des organes de commande de celle-ci comme le moteur d'actionnement et les moyens de transmission du mouvement du moteur au papillon. Une solution serait d'éloigner au maximum les organes de commande des conduits dans lesquels circulent les gaz d'échappement chauds. D'autres solutions sont décrits dans les documents FR 2 854 200, AU 506 962 B2 ou US 5,165,450. Cependant, il est au contraire souhaitable que la vanne ait une structure compacte et ramassée sur la tubulure d'échappement afin d'en limiter l'encombrement. Une telle structure favorise une température élevée de la vanne et rend difficile son refroidissement.

### OBJET DE L'INVENTION

Un but de l'invention est de proposer une vanne satisfaisant aux contraintes ci-dessus.

### BREVE DESCRIPTION DE L'INVENTION

A cet effet, on prévoit, selon l'invention, une vanne comportant un corps délimitant un conduit d'entrée de fluide débouchant dans deux conduits de sortie du fluide en formant une intersection dans laquelle est monté un papillon relié à un moteur d'actionnement du papillon entre une première position extrême dans laquelle le papillon dirige le fluide principalement vers le premier conduit de sortie et une deuxième position extrême dans laquelle le papillon dirige le fluide principalement vers le deuxième conduit de sortie, le moteur étant disposé entre les conduits de sortie au voisinage d'une zone de raccordement des conduits de sortie l'un à l'autre et le papillon étant monté devant la zone de raccordement de telle manière que le papillon forme pour cette zone de raccordement un écran vis-à-vis du fluide.

Ainsi, la position du moteur entre les conduits de sortie au voisinage du raccordement de ceux-ci permet l'obtention d'une structure compacte autour des conduits de sortie. Le papillon, en formant un écran, empêche que la zone de raccordement soit en contact direct avec le fluide transporté et limite de la sorte l'influence de la température du fluide sur celle du moteur.

De préférence, le moteur est contenu dans un logement ayant une paroi formant la zone de raccordement des conduits de sortie.

La compacité de la vanne est ainsi encore améliorée.

Selon un mode de réalisation particulier, le logement est pourvu de moyens de refroidissement de la paroi formant la zone de raccordement.

Les moyens de refroidissement permettent de maintenir à une température optimale le moteur et les moyens de transmission du mouvement au papillon. En outre, ces moyens de refroidissement permettent l'utilisation d'éléments d'étanchéité en élastomère relativement commun au lieu d'éléments élastomère en matériau à haute tenue thermique. Ces éléments d'étanchéité assurent une étanchéité satisfaisante pour un coût relativement faible.

Avantageusement, le papillon a au moins une partie s'étendant le long d'au moins une partie de la paroi du logement lorsque le papillon est dans ses positions extrêmes.

Le papillon peut alors être soumis au moins en partie à l'action des moyens de refroidissement directement par conduction ou au moins indirectement. Ceci limite en outre le risque que du fluide transporté ne vienne circuler entre le papillon et la paroi.

De préférence encore, le papillon est porté par un axe ayant des extrémités reçues dans des paliers soumis aux moyens de refroidissement.

Le refroidissement des paliers limite le risque de grippage de ceux-ci et permet un refroidissement par conduction de l'axe et du papillon.

Avantageusement encore, le papillon est porté par un axe s'étendant à proximité immédiate de la paroi le long d'une partie de celle-ci.

Un refroidissement de l'axe par rayonnement est ainsi possible.

D'autres caractéristiques et avantages de l'invention ressortiront à la lecture de la description qui suit d'un mode de réalisation particulier non limitatif de l'invention.

### BREVE DESCRIPTION DES DESSINS

Il sera fait référence aux dessins annexés, parmi lesquels :

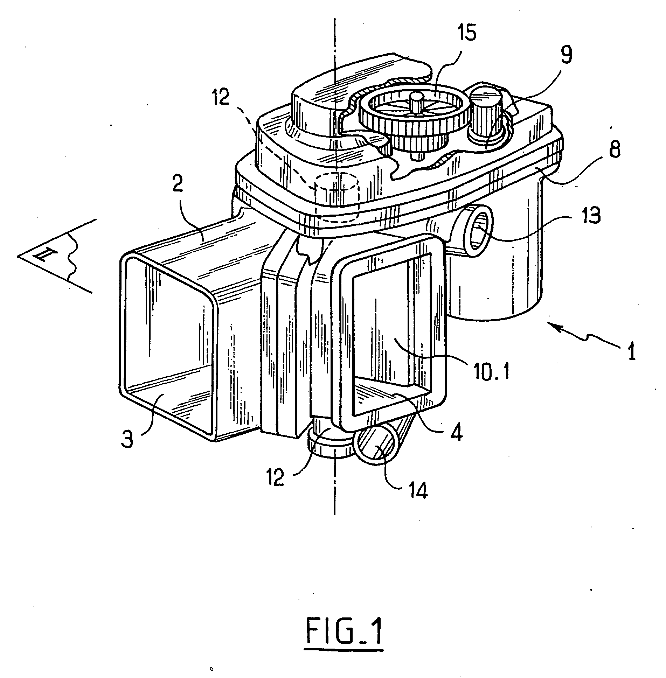

- la figure 1 est une vue en perspective de la vanne conforme à l'invention, avec écorché,

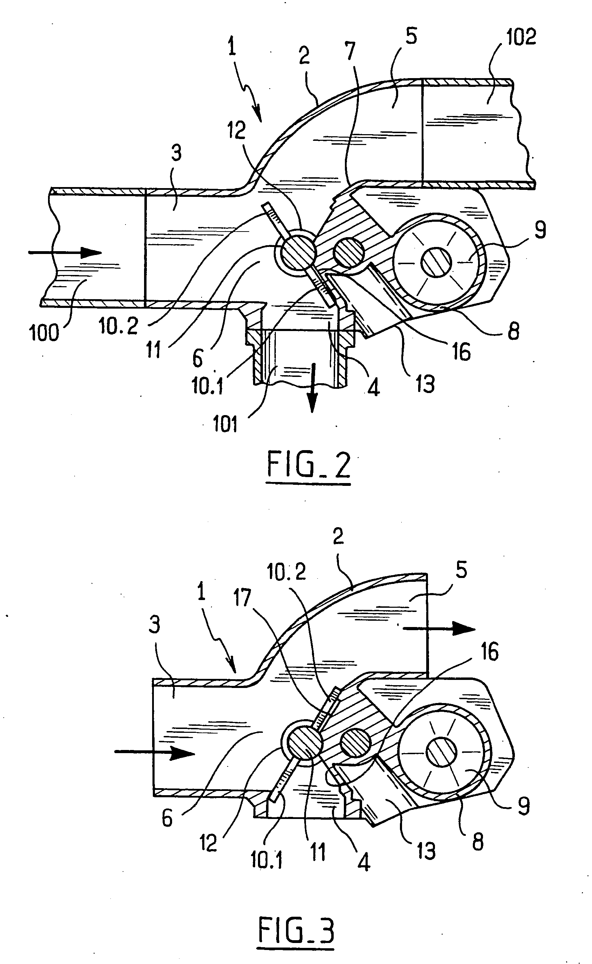

- la figure 2 est une vue schématique de dessus de cette vanne, en coupe selon le plan II de la figure 1, pour une première position du papillon,
- la figure 3 est une vue analogue à la figure 2 pour une deuxième position du papillon.

### DESCRIPTION DETAILLEE DE L'INVENTION

En référence aux figures, la vanne généralement désignée en 1 est ici destinée à être disposée sur la parte basse pression de la tubulure d'échappement 100 d'un moteur thermique pour diriger les gaz d'échappement soit vers l'extérieur soit vers un dispositif de recyclage 101 (seule une partie du conduit d'entrée du dispositif de recyclage est représentée). En prenant à titre d'exemple un moteur thermique équipé d'un turbocompresseur, la partie basse pression de la tubulure d'échappement se trouve en aval de la turbine du turbocompresseur.

La vanne 1 comprend un corps 2 délimitant un conduit d'entrée 3 débouchant dans deux conduits de sortie 4, 5 en formant une intersection 6. Le conduit d'entrée 3 a une extrémité pourvue de moyens de sa liaison à la tubulure d'échappement 100 côté moteur thermique et une extrémité opposée reliée à des premières extrémités concourantes des deux conduits de sortie 4, 5 ayant des extrémités opposées pourvues de moyens de leur liaison respectivement au dispositif de recyclage 101 et au tronçon final 102 de la tubulure d'échappement 100. Les premières extrémités des conduits de sortie 4, 5 se raccordent en formant sensiblement un angle droit dont la pointe est orientée vers le conduit d'entrée 3.

La partie interne de l'angle droit est formée par une paroi 7 d'un logement 8 reliant les conduits de sortie 4, 5 dans la partie interne de l'angle droit. La paroi 7 constitue ainsi une zone de raccordement des conduits de sortie 4, 5. Le logement 8 est formé d'un boîtier en aluminium incorporant des moyens de son refroidissement assurant plus particulièrement le refroidissement de la paroi 7. Ces moyens de refroidissement comprennent ici un canal ayant une portion d'entrée 13 et une portion de sortie 14 réalisés dans le boîtier formant le logement 8 pour permettre la circulation d'un fluide caloporteur. Les portions 13 et 14 du canal de refroidissement sont ici destinées à être reliées au circuit de refroidissement du moteur thermique.

Le logement 8 accueille un moteur 9 d'actionnement d'un papillon 10 monté dans l'intersection 6 en amont de la paroi 7 par référence à un sens d'écoulement des gaz d'échappement dans les conduits 3, 4, 5. Le moteur 9 est un moteur électrique à courant continu. Le papillon 10 est solidaire d'un axe 11 qui s'étend à proximité immédiate et le long de la paroi 7 et qui a des extrémités reçues à pivotement dans des paliers 12 solidaires du logement 8 de manière que les paliers 12 bénéficient au moins en partie du refroidissement procuré à la paroi 7 par le canal de refroidissement du logement 8. Le canal de refroidissement a ses portions d'entrée 13 et de sortie 14 qui sont adjacentes aux paliers 12 et en contact avec ceux-ci pour refroidir lesdits paliers 12. Le voisinage de l'axe 11 avec la paroi 7 favorise le refroidissement de l'axe 11. De préférence le canal de refroidissement passe au voisinage de l'axe 11. L'axe 11 est relié à l'arbre de sortie du moteur 9 par des moyens de transmission de type classique, ici des engrenages 15 montés.sur le logement 8 de manière à être soumis à l'action des moyens de refroidissement du logement 8. Les engrenages 15 sont ici réalisés en matière plastique. Sous les engrenages, un joint (non visible sur les figures) est disposé sur l'axe 11 pour assurer une étanchéité entre l'axe 11 et le corps 2. Le refroidissement de l'axe 11 permet l'utilisation d'un joint en élastomère. Il en est de même pour les autres éléments d'étanchéité de la vanne pouvant bénéficier directement ou indirectement du refroidissement procuré par les moyens de refroidissement. Les éléments d'étanchéité soumis à plus haute température sont réalisés en matériau à haute tenue thermique comme une céramique.

Le papillon 10 est ainsi déplaçable entre une première position extrême dans laquelle le papillon 10 dirige le fluide principalement vers le conduit de sortie 4 et une deuxième position extrême dans laquelle le papillon 10 dirige le fluide principalement vers le conduit de sortie 5.

Dans sa première position extrême, le papillon 10 a une partie 10.1 s'étendant le long de la paroi 7 du côté du conduit de sortie 4 et une partie 10.2 obturant partiellement le conduit de sortie 5. La partie 10.1 a un bord libre en appui contre la paroi 7. Un renfoncement 16 de la paroi 7 forme un espace libre de faible épaisseur laissé derrière la partie 10.1.

Dans sa deuxième position extrême, le papillon 10 a sa partie 10.2 s'étendant le long de la paroi 7 du côté du conduit de sortie 5 et sa partie 10.1 obturant le conduit de sortie 4. La partie 10.2 a un bord libre en appui contre la paroi 7. Un renfoncement 17 de la paroi 7 forme un espace libre de faible épaisseur laissé derrière la partie 10.2.

Le fonctionnement et la commande de cette vanne sont classiques.

Bien entendu, l'invention n'est pas limitée au mode de réalisation décrit mais englobe toute variante entrant dans le cadre de l'invention défini par les revendications.

En particulier, bien que la vanne de l'invention ait été décrite dans une application au recyclage des gaz d'échappement, la vanne est utilisable dans d'autres applications de régulation ou de distribution de fluides et notamment pour des fluides de températures plus faibles.

En outre, le logement 8 peut être disposé au voisinage de la zone de raccordement sans que ladite zone de raccordement soit formée par une paroi du logement. 8. L'augmentation de l'encombrement résultant de ce positionnement du logement est compensé par le fait qu'en étant un peu éloigné de la zone de raccordement, le moteur a naturellement une température moins élevée, ce qui facilite son refroidissement. Le logement 8 peut ainsi être dissocié des conduits.

Bien qu'il ait été indiqué que le logement du moteur est en aluminium et les engrenages en matière plastique (ce qui permet d'avoir une vanne relativement légère), il est possible de réaliser ces éléments en acier.

Le corps 2 peut en outre être réalisé en une ou plusieurs parties.

## Revendications

1. Vanne comportant un corps (2) délimitant un conduit d'entrée (3) de fluide débouchant dans deux conduits de sortie (4, 5) du fluide en formant une intersection (6) dans laquelle est monté un papillon (10) relié à un moteur (9) d'actionnement du papillon entre une première position extrême dans laquelle le papillon dirige le fluide principalement vers le premier conduit de sortie et une deuxième position extrême dans laquelle le papillon dirige le fluide principalement vers le deuxième conduit de sortie, **caractérisée en ce que** le moteur est disposé entre les conduits de sortie au voisinage d'une zone de raccordement (7) des conduits de sortie l'un à l'autre et **en ce que** le papillon est monté devant la zone de raccordement de telle manière que le papillon forme pour cette zone de raccordement un écran vis-à-vis du fluide.

2. Vanne selon la revendication 1, **caractérisée en ce que** le moteur (9) est contenu dans un logement (8) ayant une paroi (7) formant la zone de raccordement des conduits de sortie (4, 5).

3. Vanne selon la revendication 2, **caractérisée en ce que** le logement (8) est pourvu de moyens de refroidissement (13, 14) de la paroi (7) formant la zone de raccordement.

4. Vanne selon la revendication 3, **caractérisée en ce que** le papillon (10) a au moins une partie (10.1, 10.2) s'étendant le long d'au moins une partie de la paroi (7) du logement (8) lorsque le papillon est dans ses positions extrêmes.

5. Vanne selon la revendication 3, **caractérisée en ce que** le papillon (10) est porté par un axe (11) ayant des extrémités reçues dans des paliers (12) solidaires du logement (8) et soumis aux moyens de refroidissement (13).

6. Vanne selon la revendication 3, **caractérisée en ce que** le papillon (10) est porté par un axe (11) s'étendant à proximité immédiate de la paroi (7) le long d'une partie de celle-ci.

## Claims

1. Valve comprising a body (2) delimiting a fluid inlet duct (3) opening into two fluid outlet ducts (4, 5) forming an intersection (6) in which a butterfly valve (10) is mounted connected to a motor (9) for actuating the butterfly valve between a first extreme position in which the butterfly valve directs the fluid mainly toward the first outlet duct and a second extreme position in which the butterfly valve directs the fluid mainly toward the second outlet duct, **characterized in that** the motor is placed between the outlet ducts in the vicinity of a zone (7) connecting the outlet ducts to one another and **in that** the butterfly valve is mounted in front of the connecting zone so that the butterfly valve forms a screen against the fluid for this connecting zone.

2. Valve according to Claim 1, **characterized in that** the motor (9) is contained in a housing (8) having a wall (7) forming the connecting zone of the outlet ducts (4, 5).

3. Valve according to Claim 2, **characterized in that** the housing (8) is provided with means (13, 14) for cooling the wall (7) forming the connecting zone.

4. Valve according to Claim 3, **characterized in that** the butterfly valve (10) has at least one portion (10.1, 10.2) extending along at least one portion of the wall (7) of the housing (8) when the butterfly valve is in its extreme positions.

5. Valve according to Claim 3, **characterize in that** the butterfly valve (10) is supported by a spindle (11) having ends received in bearings (12) fixedly attached to the housing (8) and subjected to the cooling means (13).

6. Valve according to Claim 3, **characterized in that** the butterfly valve (10) is supported by a spindle (11) extending in the immediate vicinity of the wall (7) along a portion of the latter.

## Patentansprüche

1. Ventil, mit einem Körper (2), der eine Fluideingangsleitung (3) begrenzt, die in zwei Fluidausgangsleitungen (4, 5) mündet, indem eine Kreuzung (6) gebildet ist, in der eine Ventilklappe (10) montiert ist, die mit einem Motor (9) verbunden ist, um die Ventilklappe zwischen einer ersten Extremstellung, in der die Ventilklappe das Fluid hauptsächlich zu der ersten Ausgangsleitung lenkt, und einer zweiten Extremstellung, in der die Ventilklappe das Fluid hauptsächlich zu der zweiten Ausgangsleitung lenkt, zu betätigen, **dadurch gekennzeichnet, dass** der Motor zwischen den Ausgangsleitungen benachbart zu einer Zone (7), in der die Ausgangsleitungen miteinander verbunden sind, angeordnet ist und dass die Ventilklappe vor der Verbindungszone montiert ist, derart, dass die Ventilklappe für diese Verbindungszone eine Blende für das Fluid bildet.

2. Ventil nach Anspruch 1, **dadurch gekennzeichnet, dass** der Motor (9) in einem Aufnahmesitz (8) enthalten ist, der eine Wand (7) besitzt, die die Verbindungszone der Ausgangsleitungen (4, 5) bildet.

3. Ventil nach Anspruch 2, **dadurch gekennzeichnet, dass** der Aufnahmesitz (8) mit Mitteln (13, 14) für die Kühlung der die Verbindungszone bildenden Wand (7) versehen ist.

4. Ventil nach Anspruch 3, **dadurch gekennzeichnet, dass** die Ventilklappe (10) wenigstens einen Teil (10.1, 10.2) besitzt, der sich wenigstens längs eines Teils der Wand (7) des Aufnahmesitzes (8) erstreckt, wenn sich die Ventilklappe in ihren Extremstellungen befindet.

5. Ventil nach Anspruch 3, **dadurch gekennzeichnet, dass** die Ventilklappe (10) von einer Welle (11) getragen wird, deren Enden in Lagern (12) aufgenommen sind, die mit dem Aufnahmesitz (8) fest verbunden sind und mit den Kühlungsmitteln (13) beaufschlagt werden.

6. Ventil nach Anspruch 3, **dadurch gekennzeichnet, dass** die Ventilklappe (10) von einer Welle (11) getragen wird, die sich in unmittelbarer Umgebung der Wand (7) längs eines Teils hiervon erstreckt.
